# EUROPÄISCHE PATENTSCHRIFT

(11) **EP 0 335 285 B1**
(45) Veröffentlichungstag und Bekanntmachung des Hinweises auf die Patenterteilung: **14.07.1993**
(21) Anmeldenummer: 89105336.5
(22) Anmeldetag: 25.03.1989
(51) Int. Cl.: A61C 9/00

(54) **Steckverbindung zur Befestigung von Zahn- oder Kiefersegmenten auf einer Modellbasis**
Dowel pin connection
Goujon pour le montage amovible d'un modèle d'appareil dentaire sur un modèle d'embase

(30) Priorität: 29.03.1988 DE 3810690
(43) Veröffentlichungstag der Anmeldung: 04.10.1989
(73) Patentinhaber: Mack, Heinz, D-80637 München (DE)
(72) Erfinder: Mack, Heinz, D-80637 München (DE)
(74) Vertreter: Steffens, Joachim, Dr.

(56) Entgegenhaltungen:
- FR-A- 2 310 738
- US-A- 3 932 939

## Beschreibung

Die vorliegende Erfindung betrifft eine Steckverbindung zur Befestigung von Zahn- oder Kiefersegmenten auf einer Modellbasis, die aus einem Stift und einer dazu passenden Hülse besteht, in welcher der Stift einen festen, durch Gegendruck wieder lösbaren Sitz hat.

Eine solche Steckverbindung ist beispielsweise aus der FR-A-2 310 738, die der DE-AS 25 21 573 entspricht, bekannt. Der Stift besteht dabei aus 3 Bereichen, und zwar aus einem Stiftschaft, sonst auch Steckschaft genannt, einem Bundkopf und einem Retentionsteil, sonst auch Fixierschaft genannt. Der dem kraftschlüssigen Sitz dienende Stiftschaft ist zylindrisch ausgebildet und findet seinen festen Sitz in einer Sackbohrung der Hülse. Dabei findet der Kraftschluß über die gesamte Länge des Stiftschaftes in der Hülse statt. Der Bundkopf, der in einer entsprechenden Ausnehmung in der Hülse Platz findet, ist so ausgebildet, daß er die Funktion einer Verdrehsicherung erfüllt, ohne dabei einen Kraftschluß mit der Hülse einzugehen. Zu diesem Zweck weist der im wesentlichen zylindrisch ausgebildete Bundkopf in einem Teilbereich eine durch eine Abfräsung längs einer Kreissekante erhaltenen Sekantenfläche auf. Das Retentionsteil wird in eine Bohrung des Zahnkranzes eingeklebt.

Bei bekannten Steckverbindungen dieser Art ist der Teil des Stiftes, der in die Hülse hineingesteckt wird, d.h. der Steckschaft, entweder zylindrisch oder konisch ausgebildet, wobei das Innere der Hülse, in die der Stift gesteckt wird, dem Steckschaft entsprechend zylindrisch oder konisch gestaltet ist. Der Stift kann dabei ein Einzel- oder ein Doppelstift sein.

Die konischen Stifte haben den Nachteil, daß die Aufhebung der Verbindungskraft zwischen Steckschaft und Hülse unmittelbar bei Beginn des Abhebens des jeweiligen Zahn- oder Kiefersegments erfolgt, d.h., daß der Kraftschluß sofort beim Anheben aufgehoben wird. Außerdem bewirkt die konische Ausführungsform einerseits eine harte Friktion im Schlußsitz und andererseits eine ungenügend gesicherte Retention vor oder beim Abheben des Zahn- oder Kiefersegments.

Demgegenüber zeigen die zylindrischen Steckschafte, bei denen der Kraftschluß zwischen Steckschaft und Hülse zwar auch über einen langen Schaft erfolgt, daß eine vollständige Aufhebung der Verbindungskraft zwischen Steckschaft und Hülse erst dann erreicht wird, wenn der Steckschaft vollständig aus der Hülse herausgezogen ist, d.h., um die vollständige Aufhebung der Verbindungskraft zu bewirken, ist das vollständige Abheben des Zahn- oder Kiefersegments über die gesamte Länge des Steckschaftes erforderlich. Abgesehen von einem größeren Kraftaufwand beim Lösen der Zahn- oder Kiefersegmente von der Modellbasis, können bei Segmenten mit mehreren Stiften oder auch bei mehrgliedrigen Modellationen auf den Zahnstümpfen schon kleine Fehler in der Parallelität, die beim Bohren des Fixierlochs oder Einkleben des Fixierschaftes entstehen, eine Verkantung bzw. Spreizung bewirken. Dies tritt in der Regel bei divergenten oder konvergenten Stumpf-Präparationen oder Zahnachsenrichtungen auf.

Aufgabe der vorliegenden Erfindung ist es daher, eine Steckverbindung zu schaffen, bei der einerseits die Verbindungskraft zwischen Steckschaft und Hülse nicht unmittelbar (Konus) bei Beginn des Abhebens des Zahn- oder Kiefersegments erfolgt, und andererseits die Nachteile vermieden werden, die dadurch entstehen, wenn über den gesamten Bereich des zylindrischen Steckschafts eine Reibungskraft besteht, die erst dann vollständig aufgehoben ist, wenn der Steckschaft vollständig aus der Hülse herausgezogen wurde.

Gelöst wird diese Aufgabe durch die Steckverbindung gemäß Anspruch 1.

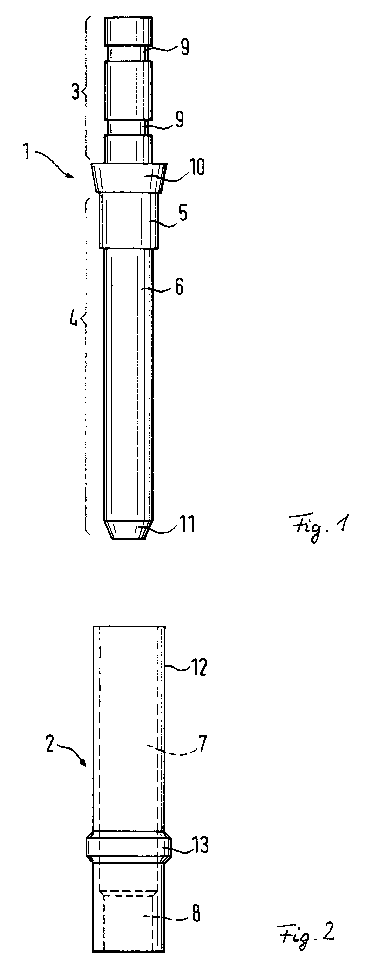

Die Erfindung wird nachfolgend anhand der Fig. 1 und 2 erläutert, ohne sie jedoch darauf einzuschränken. Die aus den Fig. 1 und 2, die eine erfindungsgemäß bevorzugte Ausführungsform des Stiftes 1 und der Hülse 2 in stark vergrößertem Maßstab darstellt, erkennbaren Details gehören mit zur erfindungsgemäßen Offenbarung und stellen bevorzugte Merkmale dar.

In den Fig. 1 und 2 und in den entsprechenden Beschreibungsteilen haben die Bezugsziffern folgende Bedeutung:
- 1: Stift
- 2: Hülse
- 3: permanent fixierbarer Fixierschaft
- 4: lösbarer Steckschaft
- 5: größerer Kupplungsbereich
- 6: kleinerer Kupplungsbereich
- 7: größerer Hohlzylinderbereich
- 8: kleinerer Hohlzylinderbereich
- 9: Retentionsvertiefungen
- 10: Konusbund
- 11: Führungsfase
- 12: Hülsenwandung
- 13: Ringwulst
Wie aus der Fig. 1 ersichtlich ist, ist zwar der im Querschnitt kleinere Kupplungsbereich 6 länger als der größere Kupplungsbereich 5, doch ist der "echte" Kupplungsbereich 6 genauso lang wie der größere Kupplungsbereich 5. Durch diese Ausführungsform wird erreicht, daß beim Herausziehen des Steckschaftes 4 aus der Hülse 2 der kleinere Kupplungsbereich 6 in genau dem gleichen Maße wie der größere Kupplungsbereich 5 gelöst wird. Beide Kupplungsbereiche 5,6 sind vorzugsweise zylindrisch ausgebildet, obwohl es natürlich auch möglich ist, daß der eine Kupplungsbereich zylindrisch und der andere konisch ausgebildet ist.

Vorzugsweise ist auch der Fixierschaft 3 zylindrisch, wobei ferner bevorzugt wird, daß der zylindrische Fixierschaft 3 einen gleichen oder etwas kleineren Durchmesser aufweist, wie der kleinere Kupplungsbereich 6, obwohl er natürlich auch größer sein kann. Der Fixierschaft 3 wird vorzugsweise in vorher in die Unterseite des Zahn- bzw. Kiefermodells gebohrte Löcher eingeklebt. Zu diesem Zweck weist der Fixierschaft 3 vorzugsweise einen oder mehrere Retentionsvertiefungen 9 auf, die vorzugsweise die Form von Ringnuten haben.

Der größere Kupplungsbereich 5 ist im Durchmesser vorzugsweise größer als der zylindrische Fixierschaft 3, da durch den dabei gebildeten Absatz gewährleistet ist, daß die Stifte stets in gleicher Länge aus dem Boden des Zahn- bzw. Kiefermodells herausragen und genau zentriert sind. Natürlich kann der Durchmesser des größeren Kupplungsbereichs 5 auch kleiner als der des Fixierschaftes 3 sein, nur ist es dann auf jeden Fall zweckmäßig, daß zwischen Fixierschaft 3 und größerem Kupplungsbereich 5 ein Ring- oder Konusbund 10 angeordnet ist, der im Durchmesser größer als der Durchmesser des Fixierschaftes 3 ist, wodurch auch in diesem Falle gewährleistet ist, daß ein Absatz gebildet wird, der ebenfalls gewährleistet, daß die Stifte stets in gleicher Länge aus dem Zahn- bzw. Kiefermodell herausragen und exakt zentriert sind.

Um das Einstecken des Steckschaftes 4 in die Hülse 2 zu erleichtern, befindet sich vorzugsweise an dem einen Ende des kleineren Kupplungsbereichs 6 eine Führungsfase 11. Es ist natürlich auch möglich, den Steckschaft 3 nicht mit einer Führungsfase 11 zu versehen, wobei es dann allerdings vorteilhaft ist, sowohl den größeren als auch den kleineren Hohlzylinderbereich 7,8 an den Stellen, wo die Kupplungsbereiche 5,6 zuerst mit den Hohlzylinderbereichen 7,8 in Berührung kommen, mit entsprechenden entgegengesetzt ausgebildeten Führungsfasen zu versehen.

Die Hülse 2 ist vorzugsweise so lang wie der gesamte Steckschaft 4, jedoch ohne die Führungsfase 11. Ferner ist die Wandung 12 der Hülse 2 zur Verbesserung der Retention gegenüber dem Material der Modellbasis an mindestens einer Stelle in Form einer Ringwulst 13 ausgebildet.

Der Stift 1 besteht vorzugsweise aus Metall, insbesondere aus Messing, während die Hülse 2 vorzugsweise aus Kunststoff besteht, obwohl sie auch aus Metall (z.B. Messing) bestehen kann.

In der Praxis hat der in Fig. 1 dargestellt und erfindungsgemäß bevorzugte Stift eine Gesamtlänge von ca. 18 mm, wobei der Durchmesser des Fixierschaftes 3 und des kleineren Kupplungsbereichs 6 etwa 1,5 bis 2 mm beträgt. Der Fixierschaft ist ca. 5 mm, der Ringkonus ca. 1 mm, der Steckschaft ca. 11 mm und die Führungsfase ca. 1 mm lang. Die Hülse 2 hat eine Gesamtlänge von ca. 11 mm. Der größere Kupplungsbereich 5 und der kleinere Hohlzylinderbereich 8 sind jeweils ca. 2 mm lang.

Die erfindungsgemäß bevorzugte Ausführungsform zeigt gegenüber den eingangs geschilderten zylindrischen und konischen Stiftsystemen folgende Vorteile:
(a) Die Aufhebung der Reibungskräfte erfolgt beim Abheben des Zahn- oder Kiefersegments nach ca. 2 mm, da dann gleichzeitig sowohl der größere Kupplungsbereich 5 als auch der kleinere Kupplungsbereich 6 aus dem größeren Hohlzylinderbereich 7 und dem kleineren Hohlzylinderbereich 8 herausgezogen wird.
(b) Der exakte Sitz wird herbeigeführt durch Friktion sowohl zwischen dem größeren Kupplungsbereich 5 und einem Teil der Innenwandung des größeren Hohlzylinderbereichs 7 als auch einem Teil des kleineren Kupplungsbereichs 6 und der Innenwandung des kleineren Hohlzylinderbereichs 8.
(c) Die Führungsfase 11 dient der Zentrierung beim Einführen des Steckschaftes 4 in die in der Modellbasis befindliche Hülse 2.
(d) Der Konusbund 10 vermeidet Absplitterungen an der Oberfläche der Modellbasis beim Abheben des Zahn- bzw. Kiefermodells bzw. beim Wiedereinführen der Steckschafte 4 in die Hülsen 2.
(e) Die obere Seite des Konusbundes 10 in Richtung des Fixierschaftes 3 bildet eine breite Auflagefläche, die eine präzise Zentrierung beim Einkleben des Fixierschaftes 3 in das Zahn- bzw. Kiefermodell gewährleistet.
(f) Der Fixierschaft 3 verdrängt den Klebstoff beim Einsetzen des Fixierschaftes in die Bohrung, die sich in dem Zahn-bzw. Kiefermodell befindet, wobei die Retentionsringnuten 9 den verdrängten Klebstoff aufnehmen und somit einen sicheren Halt gegen vertikal wirkende Kräfte beim Abnehmen und wieder Einstecken der Zahn- oder Kiefersegmente in die Modellbasis bietet.

## Patentansprüche

1. Steckverbindung zur Befestigung von Zahn- oder Kiefersegmenten auf einer Modellbasis, bestehend aus einem Stift (1) und einer dazu passenden Hülse (2), wobei der Stift (1) aus einem permanent fixierbaren zylindrischen Fixierschaft (3), einem lösbaren zylindrischen Steckschaft (4), der in der Hülse (2) einen festen, durch Gegendruck wieder lösbaren Sitz hat, und gegebenenfalls einem Bund (10) besteht, der sich zwischen dem Fixierschaft (3) und dem Steckschaft (4) befindet und der im Querschnitt größer als der Fixier-schaft (3) und größer als der Steckschaft (4) ist, dadurch gekennzeichnet, daß
(a) der lösbare Steckschaft (4) des Stiftes (1) aus einem im Querschnitt größeren Kupplungsbereich (5) und einem sich daran anschließenden, gegenüber dem größeren Kupplungsbereich (5) im Querschnitt kleineren Kupplungsbereich (6) besteht, wobei zumindest entweder der größere Kupplungsbereich (5) oder der kleinere Kupplungsbereich (6) die Form eines Zylinders aufweist.
(b) die Hülse (2) aus einem im Querschnitt größeren Hohlzylinderbereich (7), der einen Innendurchmesser aufweist, der dem Durchmesser des größeren Kupplungsbereiches (5) entspricht und einem im Querschnitt kleineren Hohlzylinderbereich (8) besteht, der einen Innendurchmesser aufweist, der dem Durchmesser des kleineren Kupplungsbereiches (6) entspricht,
(c) der im Querschnitt kleinere Kupplungsbereich (6) länger als der im Querschnitt größere Kupplungsbereich (5) ist, und
(d) die Länge des größeren Kupplungsbereichs (5) des Steckschaftes (4) gleich der Länge des kleineren Hohlzylinderbereichs (8) der Hülse (2) ist.

2. Steckverbindung nach Anspruch 1, dadurch gekennzeichnet, daß sowohl der Fixierschaft (3) als auch der größere und der kleinere Kupplungsbereich (5,6) zylindrisch ausgebildet sind.

3. Steckverbindung nach Anspruch 1 oder 2, dadurch gekennzeichnet, daß der zylindrische Fixierschaft (3) und der kleinere zylindrische Kupplungsbereich (6) den gleichen Durchmesser aufweisen.

4. Steckverbindung nach einem oder mehreren der Ansprüche 1 bis 3, dadurch gekennzeichnet, daß der Fixierschaft (3) eine oder mehrere Retentionsvertiefungen (9) aufweist.

5. Steckverbindung nach einem oder mehreren der Ansprüche 1 bis 4, dadurch gekennzeichnet, daß zwischen dem Fixierschaft (3) und dem Steckschaft (4) ein Konusbund (10) angeordnet ist.

6. Steckverbindung nach einem oder mehreren der Ansprüche 1 bis 5, dadurch gekennzeichnet, daß sich an seinem einen Ende eine Führungsfase (11) befindet.

7. Steckverbindung nach einem oder mehreren der Ansprüche 1 bis 6, dadurch gekennzeichnet, daß die Hülsenwandung (12) an mindestens einer Stelle zwecks Verbesserung der Retention gegenüber dem Material der Modelbasis in Form einer Ringwulst (13) ausgebildet ist.

8. Steckverbindung nach einem oder mehreren der Ansprüche 1 bis 7, dadurch gekennzeichnet, daß die Hülse so lang ist, wie die Summe der Längen von größerem und kleinerem Kupplungsbereich (5,6), d.h. im Falle des Vorhandenseins einer Führungsfase (11) ohne diese.

## Claims

1. A plug connection for fastening tooth or jaw segments to a pattern base, said plug connection consisting of a pin (1) and a matching sleeve (2), said pin (1) consisting of a permanently lockable locking shank (3), a detachable plug-in shank (4), which is firmly seated in the sleeve (2) and wherefrom it can be separated again by counter-pressure, and optionally a collar or flansh (10) having a larger cross section than the locking shank (3) and the plug-in shank (4) and which is located between the locking shank (3) and the plug-in shank (4), characterized in that
(a) the detachable plug-in shank (4) of the pin (1) consists of a coupling region (5) of larger cross section and an adjacent coupling region (6) of a cross section smaller than that of the larger coupling region (5), and at least either the larger coupling region (5) or the smaller coupling region (6) is of cylindrical configuration,
(b) the sleeve (2) consists of a hollow cylindrical region (7) of larger cross section with an inner diameter corresponding to the diameter of the larger coupling region (5) and a hollow cylindrical region (8) of smaller cross section corresponding to the diameter of the smaller coupling region (6),
(c) the coupling region (6) of smaller cross section is longer than the coupling region (5) of larger cross section, and
(d) the length of the larger coupling region (5) of the plug-in shank (4) is equal to the length of the smaller hollow cylinder region (8) of the sleeve (2).

2. Plug connection according to claim 1, characterized in that both the locking shaft (3) and the larger and smaller coupling regions (5, 6) are of cylindrical shape.

3. Plug connection according to claim 1 or 2, characterized in that the cylindrical locking shank (3) and the smaller cylindrical coupling region (6) have the same diameters.

4. Plug connection according to one or more of the claims 1 to 2, characterized in that the locking shank (3) has one or more retention recesses.

5. Plug connection according to one or more of the claims 1 to 4, characterized in that between the locking shank (3) and the plug-in shank (4) a conical collar or flansh (10) is provided.

6. Plug connection according to one or more of the claims 1 to 5, characerized in that at one end thereof it has a guide land (11).

7. Plug connection according to one or more of the claims 1 to 6, charactrized in that the sleeve wall (12) has at least in one part thereof the shape of an annular bead (13).

8. Plug connection according to one or more of the claims 1 to 7, characterized in that the sleeve length corresponds to the lengths of the larger and the smaller coupling regions (5, 6), i.e. without the land (11), if any.

## Revendications

1. Liaison par enfichage pour la fixation de segments de dent ou de segments de mâchoire sur une base de modèle, se composant d'une broche (1) et d'un manchon (2) s'appliquant à elle, la broche (1) comportant une tige de fixation (3) cylindrique pouvant être fixée de façon permanente, une tige enfichable (4) cylindrique détachable qui a dans le manchon (2), un siège fixe, amovible à nouveau par contre pression et comprend éventuellement, une collerette (10) qui se trouve entre la tige de fixation (3) et la tige enfichable (4) et dont la section transversale est plus grande que la tige de fixation (3) et plus grande que la tige enfichable (4), liaison caractérisée en ce que:
a) la tige enfichable détachable (4) de la broche (1) est composée d'une zone d'accouplement (5) de section transversale plus grande et d'une zone d'accouplement (6) de section transversale plus petite par rapport à la zone d'accouplement (5), et au moins soit la zone d'accouplement (5) plus large, soit la zone d'accouplement (6) plus étroite, ont une forme cylindrique,
b) le manchon (2) comprend une zone cylindrique creuse (7) de section transversale plus grande, avec un diamètre intérieur correspondant au diamètre de la zone d'accouplement (5) plus large et une zone cylindrique creuse (8) de section transversale plus petite, ayant un diamètre intérieur, correspondant au diamètre de la zone d'accouplement (6) plus étroite,
c) la zone d'accouplement (6) de section transversale plus petite est plus longue que la zone d'accouplement (5) de section transversale plus grande, et
d) la longueur de la zone d'accouplement (5) plus large de la tige enfichable (4) est égale à la longueur de la zone plus étroite (8) du cylindre creux du manchon (2).

2. Liaison par enfichage selon la revendication 1, caractérisée en ce qu'aussi bien la tige de fixation (3) que la zone d'accouplement plus large et la zone d'accouplement plus étroite (5, 6) sont cylindriques.

3. Liaison par enfichage selon la revendication 1 ou 2, caractérisée en ce que la tige de fixation (3) cylindrique et la zone d'accouplement (6) cylindrique plus étroite, ont le même diamètre.

4. Liaison par enfichage selon une ou plusieurs des revendications 1 à 3, caractérisée en ce que la tige de fixation (3) a un ou plusieurs évidements de rétention (9).

5. Liaison par enfichage selon une ou plusieurs des revendications 1 à 4, caractérisée en ce qu'entre la tige de fixation (3) et la tige enfichable (4) est disposée une collerette conique (10).

6. Liaison par enfichage selon une ou plusieurs des revendications 1 à 5, caractérisée en ce qu'à son extrémité se situe un chanfrein de guidage (11).

7. Liaison par enfichage selon une ou plusieurs des revendications 1 à 6, caractérisée en ce que la paroi du manchon (12) est réalisée sous la forme d'un bourrelet annulaire (13) au moins en un endroit en vue d'améliorer la rétention vis à vis du matériau de base du modèle.

8. Liaison par enfichage selon une ou plusieurs des revendications 1 à 8, caractérisée en ce que le manchon (2) a une longueur correspondant à la somme des longueurs de la zone d'accouplement plus large et de la zone d'accouplement plus étroite (5, 6), c'est-à-dire sans tenir compte d'un chanfrein de guidage (11) au cas où il existe.
